# EUROPÄISCHE PATENTANMELDUNG

(11) **EP 2 737 808 A1**
(43) Veröffentlichungstag der Anmeldung: **04.06.2014**
(21) Anmeldenummer: 12195062.0
(22) Anmeldetag: 30.11.2012
(51) Int. Cl.: A23L 1/229, A23L 1/30, A23G 1/32, A23L 1/22

(54) **Nahrungsmittelzusatzstoffe**

(71) Anmelder: Symrise AG, 37603 Holzminden (DE)
(72) Erfinder: Fischer, Christof, 37170 Schönhagen (DE); Kessenich, Bernd, 37671 Höxter (DE); Peschke, Simone, 16244 Schorfheide (DE); Nembach, Oliver, 37588 Beverungen (DE)
(74) Vertreter: Fabry, Bernd

(57) **Zusammenfassung**

Vorgeschlagen werden Nahrungsmittelzusatzstoffe, enthaltend
(a) Glutaminsäure und
(b) wenigstens ein Nukleotid oder dessen Alkali- und/oder Erdalkalisalze sowie gegebenenfalls
(c) Aromastoffe ausgewählt aus der Gruppe, die gebildet wird von Purinen, Polyphenolen, 2-Acetylpyrazin, 3-Methylbutanol, 2-Phenylethylacetat, Trimethylpyrazin sowie deren Mischungen,
(d) Speisesalz,
(e) Süßstoffe und/oder
(f) Säuerungsmittel.

## Beschreibung

### Gebiet der Erfindung

Die Erfindung befindet sich auf dem Gebiet Nahrungsmittel und betrifft neue Additive zur Geschmacksverbesserung und -verstärkung speziell von Schokoladen- und Kakaoprodukten.

### Stand der Technik

Umami (jap. 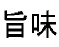 ) ist die Bezeichnung für eine der Grundqualitäten des Geschmackssinns, hervorgerufen vor allem durch Glutamate, darunter insbesondere Mononatriumglutamat, das vor allem in der asiatischen Küche und bei der industriellen Herstellung von Convenience Food wie Fertigsuppen oder vorgefertigte Lebensmittel eingesetzt wird. Der Begriff Geschmacksverstärker sollte in diesem Zusammenhang als Ausnutzung des vorhandenen physiologischen Geschmacksspektrums verstanden werden (vgl. Yamaguchi, S. et al. Journal of Nutrition. 130:921S-126S (2000**)** Umami verstärkt dabei bestimmte Geschmacksrichtungen in ihrer Intensität, ist jedoch auch in der Lage, mögliche Geschmacksfehler von Lebensmitteln zu überlagern und zu korrigieren.

Aus der EP 2484219 A1 (TableMark Co.) sind zudem Schokoladenzubereitungen mit Umami-Geschmack bekannt, die spezielle Hefeextrakte enthalten, welchen einen Gehalt von wenigstens 10 Gew.-% Natriumglutamat, wenigstens 1 Gew.-% Natriuminosinat und Natriumguanylat sowie 2-Furanmethanol und/oder 5-Methyl-2-furanmethanol enthalten.

Die Aufgabe der Erfindung hat somit darin bestanden, die spezifischen geschmacklichen Eigenschaften von Nahrungsmitteln, speziell von Schokoladen- oder Kakaoprodukten durch Zugabe eines Additivs mit Umami-Geschmacksqualität zu verbessern, zu intensivieren, abzurunden und so die sensorische Wahrnehmung des Produktes in der subjektiven Beurteilung möglichst vieler Konsumenten signifikant verbessert.

### Beschreibung der Erfindung

Gegenstand der Erfindung sind Nahrungsmittelzusatzstoffe, enthaltend
(a) Glutaminsäure und
(b) wenigstens ein Nukleotid oder dessen Alkali- und/oder Erdalkalisalze sowie gegebenenfalls
(c) Aromastoffe ausgewählt aus der Gruppe, die gebildet wird von Purinen, Polyphenolen, 2-Acetylpyrazin, 3-Methylbutanol, 2-Phenylethylacetat, Trimethylpyrazin sowie deren Mischungen,
(d) Speisesalz,
(e) Süßstoffe und/oder
(f) Säuerungsmittel.

Überraschenderweise wurde gefunden, dass Mischungen der genannten Art auch schon in geringen Mengen den geschmacklichen Wohlgeschmack von Nahrungsmitteln, speziell von Schokoladenprodukten deutlich verbessern. Insbesondere wird die Umami-Wahrnehmung signifikant verstärkt.

### Nukleotide

Nukleotide stellen die Grundbausteine der Nukleinsäuren DNA und RNA dar. Viele Arten von Nukleotiden haben lebensnotwendige regulatorische Funktionen in Zellen, beispielsweise das ATP, das cAMP und das GTP. Bei einem Nukleotid ist die 5'-OH-Gruppe der Pentose mit einer oder mehreren Phosphatgruppen verestert. Ein Nukleosidtriphosphat, beispielsweise Adenosintriphosphat (ATP), weist drei Phosphatgruppen auf, die untereinander Säureanhydridbindungen ausbilden. Über das C1'-Atom ist eine Base mit der Pentose verknüpft. Falls der Rest R eine Hydroxygruppe ist, liegt eine Ribose vor, bei einem Wasserstoffrest spricht man von einer Desoxyribose. Nukleotide sind aus drei Bestandteilen aufgebaut:
● einer Phosphorsäure (P) (Phosphat),
● einem Monosaccharid (Zucker) mit fünf Kohlenstoffatomen, auch Pentose (Z) genannt, das als Fünfring (Furanosering) vorliegt,
● einer der fünf Nukleinbasen, nämlich Adenin (A), Guanin (G), Cytosin (C), Thymin (T) oder Uracil(U).
Hierbei wird der Zucker mit der Base über eine N-glykosidische Bindung verknüpft, sowie das Phosphat mit dem Zucker über eine Esterbindung verbunden; wird mehr als ein Phosphat angehängt, so sind diese untereinander über Phosphorsäureanhydridbindungen verknüpft. Vorzugweise werden im Sinne der Erfindung Nukleotide eingesetzt, die als Monophosphate vorliegen, insbesondere das 5'-GMP (E 626) 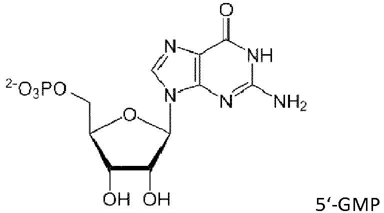 und/oder 5-TMP bzw. deren Natrium- (z.B. E 627), Kalium- (z.B. E 628) oder Calciumsalze (z.B. E 629).

Die erfindungsgemäßen Zusatzstoffe können die Komponenten (a) und (b) im Gewichtsverhältnis von etwa 10:90 bis etwa 90:10, vorzugsweise etwa 25:75 bis etwa 75:25 und insbesondere etwa 40:60 bis etwa 60:40 enthalten. Die Komponenten (a) und (b) können selbst in den Mischungen in Summe in Mengen von etwa 1 bis etwa 15, vorzugsweise etwa 2 bis etwa 10 Gew.-% enthalten sein.

### Hefeextrakte

In einer bevorzugten Ausführungsform der Erfindung können die Komponenten (a) und (b) in Form mindestens eines Hefeextraktes enthalten sein. Entsprechende Produkte sind im Markt erhältlich, wie beispielsweise Maxarome Plus Pulver (DSM), Gistex Hum LS (DSM) oder Flav-R-Max (Ohly) enthalten die Komponenten (a) und (b) typischerweise in Summe in Mengen von etwa 1 bis etwa 15 Gew.-% enthalten. Darüber hinaus enthalten die Extrakte auch bis zu 75 Gew.-% Proteine bzw. freie Aminosäuren, wie z.B. Asparaginsäure, Threonin, Serin, Glycin, Alanin, Valin, Methionin, Isoleucin, Leucin, Tyrosin, Phenylalanin, Histdin, Lysin, Prolin oder Tryptophan bzw. die entsprechenden Peptide.

Die Hefeextrakte sollten des Weiteren arm an Natriumchlorid sein, d.h. einen NaCl-Gehalt von weniger als etwa 5 Gew.-% und insbesondere weniger als 2 Gew.-% aufweisen. Zudem sollten sie im Wesentlichen frei von Glutamat sein. Im Wesentlichen ist dabei so zu verstehen, dass der Glutamatgehalt 0 bis maximal 1 Gew.-% beträgt.

In einer weiteren bevorzugten Ausführungsform der Erfindung enthalten die Zusatzstoffe
(i) etwa 20 bis etwa 60, vorzugsweise etwa 30 bis etwa 50 Gew.-% Hefeextrakte,
(ii) etwa 10 bis etwa 40, vorzugsweise etwa 15 bis etwa 30 Gew.-% Speisesalz,
(iii) etwa 10 bis etwa 20, vorzugsweise etwa 12 bis 18 Gew.-% Süßstoffe, sowie
(iv) etwa 1 bis etwa 10, vorzugsweise etwa 2 bis 8 Gew.-% Säuerungsmittel mit der Maßgabe, dass sich die Mengenangaben zu 100 Gew.-% ergänzen.
Vorzugsweise enthalten diese Extrakte zudem weniger als 10, insbesondere weniger als 5 und besonders bevorzugt weniger als 0,1 Gew.-% Natriumglutamat. Die Extrakte sind des Weiteren vorzugsweise frei von Natriuminosinat und Natriumguanylat sowie 2-Furanmethanol und/oder 5-Methyl-2-furanmethanol.

### Aromastoffe

Die Zubereitungen können ausgewählte Aromastoffe enthalten, nämlich beispielsweise
● bitter schmeckende Purine, insbesondere Theobromin und Coffein,
● bitter und adstringierend schmeckende Polyphenole, insbesondere Catechine;
● mit Röstnoten versehene Stoffe wie z.B. 2-Acetylpyrazin;
● malzartig schmeckende Stoffe wie z.B. 3-Methylbutanol;
● süß schmeckende Stoffe, wie z.B. 2-Phenylethylacetat;
● sowie erdig und röstig schmeckende Stoffe wie z.B. Trimethylpyrazin.

Mischungen der Komponenten (a), (b) und (c) sind deshalb bevorzugt, weil die Komponenten (a) und (b) nicht nur die negativen Geschmacksnoten maskieren oder reduzieren, sondern die gewünschten Geschmacksnoten auch noch verstärken. Dazu können die Komponenten im Gewichtsverhältnis (a+b) : (c) im Bereich von etwa 5:1 bis etwa 1:5, vorzugsweise etwa 3:1 bis etwa 1:3 und insbesondere etwa 2:1 bis etwa 1:2 eingesetzt werden.

Als **Süßstoffe** kommen in diesem Zusammenhang die folgenden Stoffe und Stoffgruppen in Betracht:
● ***Kohlenhydrate oder Zucker,*** wie beispielsweise Sucrose bzw. Saccharose, Trehalose, Lactose, Maltose, Melizitose, Raffinose, Palatinose, Lactulose, D-Fructose, D-Glucose, D-Galactose, L-Rhamnose, D-Sorbose, D-Mannose, D-Tagatose, D-Arabinose, D-Ribose, D-Glyceraldehyd, Maltodextrin;
● ***Pflanzliche Zubereitungen,*** die vorwiegend die oben genannten Kohlenhydrate enthalten, beispielsweise auf Basis von Zuckerrüben (*Beta vulgaris ssp.*)*,* Zuckerrohr (*Saccharum officinarum ssp.*)*,* Ahorn *(Acer ssp.),* oder Agaven sowie deren Verarbeitungsprodukten (Zuckersirup, Molasse);
● ***Synthetische bzw. enzymatische Hydrolyseprodukte*** von Stärken oder Sucrose (z.B. Invertzuckersirup, hochangereicherter Fructosesirup auf Basis Weizenstärke);
● ***Fruchtkonzentrate,*** z.B. von Äpfeln, Birnen, Trauben und daraus gewonnene Sirupe;
● ***Zuckeralkohole,*** wie z.B. Erythritol, Threitol, Arabitol, Ribitol, Xylitol, Sorbitol, Mannitol, Dulcitol, Lactitol;
● ***Proteine,*** wie z.B. Miraculin, Monellin, Thaumatin, Curculin, Brazzein;
● ***Zuckerersatzstoffe,*** wie z.B. Magap, Natriumcyclamat, Acesulfam K, Neohesperidin, Dihydrochalcon, Saccharin Natriumsalz, Aspartam, Superaspartam, Neotam, Alitam, Sucralose, Stevioside, Rebaudioside, Lugdunam, Carrelam, Sucrononat, Sucrooctat, Monatin, Phyllodulcin;
● ***Süß schmeckende Aminosäuren**,* wie z.B. Glycin, D-Leucin, D-Threonin, D-Asparagin, D-Phenylalanin, D-Tryptophan, L-Prolin;
● ***Süß schmeckende niedermolekulare Substanzen,*** wie z.B. Hernandulcin, Dihydrochalcon Glykoside, Glycyrrhizin, Glycyrrhetinsäure und deren Ester und
● ***Süß schmeckende Extrakte,*** z.B. von Lakritz (*Glyyrrhizza glabra ssp.), Lippia dulcis, Mormodica ssp.,* speziell von *Mormodica grosvenori* (Luo Han Guo) und den entsprechenden Mogrosiden, *Hydragea dulcis ssp.* und *Stevia rebaudiana* bzw. Isolate/Reinsubstanzen daraus.

Als **Säuerungsmittel** können beispielsweise Milchsäure oder Zitronensäure eingesetzt werden.

### Nahrungsmittel

Ein weiterer Gegenstand der vorliegenden Erfindung betrifft Nahrungsmittel, welche die vorgenannten Zusatzstoffe enthalten. Bei diesen Nahrungsmitteln handelt es sich vorzugsweise, jedoch nicht ausschließlich um Schokoladen- oder Kakaoprodukte, wie z.B. Milch-, Zart-, Halbbitterschokolade auch mit Zusätzen, Kuvertüre, Speiseeis, Speiseeisüberzüge, Konfekt, Pralinen, Backwaren, Nougat, Marzipan, Cremefüllungen, kakaohaltige Fettglasuren / Überzugsmassen und dergleichen. Auch Desserts und -Pulver sowie schokolade- bzw. kakao- und karamellhaltige Getränke und Getränkepulver, wie z.B. Trinkschokolade, Milkshakes, Spirituosenerzeugnisse, und die Gruppe der weiteren Zuckerwaren sind umfasst. Besonders bevorzugt sind Schokoladen und Hartkaramellen.

Zur Erzielung eines geschmacksverstärkenden Effektes ist es ausreichend, die Zusatzstoffe in Mengen von etwa 0,01 bis etwa 1 und vorzugsweise etwa 0,05 bis etwa 0,15 Gew.-% zuzusetzen.

### Gewerbliche Anwendbarkeit

Ein weiterer Gegenstand der vorliegenden Erfindung betrifft ein Verfahren zur Verstärkung des Abrundungs- und Umamigeschmacks von Schokoladen- oder Kakaoprodukten welches sich dadurch auszeichnet, dass man diesen eine Menge von 0,01 bis 1 Gew.-% einer Mischung, enthaltend
(a) Glutaminsäure und
(b) wenigstens ein Nukleotid oder dessen Alkali- und/oder Erdalkalisalze sowie gegebenenfalls
(c) Aromastoffe ausgewählt aus der Gruppe, die gebildet wird von Purinen, Polyphenolen, 2-Acetylpyrazin, 3-Methylbutanol, 2-Phenylethylacetat, Trimethylpyrazin sowie deren Mischungen,
(d) Speisesalz,
(e) Süßstoffe und/oder
(f) Säuerungsmittel zusetzt.

Ein letzter Gegenstand der Erfindung betrifft die Verwendung von Mischungen, enthaltend
(a) Glutaminsäure und
(b) wenigstens ein Nukleotid oder dessen Alkali- und/oder Erdalkalisalze sowie gegebenenfalls
(c) Aromastoffe ausgewählt aus der Gruppe, die gebildet wird von Purinen, Polyphenolen, 2-Acetylpyrazin, 3-Methylbutanol, 2-Phenylethylacetat, Trimethylpyrazin sowie deren Mischungen,
(d) Speisesalz,
(e) Süßstoffe und/oder
(f) Säuerungsmittel
als geschmacksverstärkende Zusatzstoffe zu Schokoladen- oder Kakaoprodukten. Die Additive verstärken insbesondere die Umami-Wahrnehmung beim Verzehr und werden in Mengen von etwa 0,01 bis etwa 1 Gew.-% und vorzugsweise etwa 0,05 bis etwa 0,15 Gew.-% den Schokoladen- oder Kakaoprodukten zugesetzt.

### Beispiele

### Beispiel 1, Vergleichsbeispiel V1

Der folgenden Untersuchung liegen die geschmacklichen Beurteilungen einer Testgruppe von 81 Personen zu Grunde. Die Tester wurden ausgesucht hinsichtlich ihrer Vorliebe für Schokolade und Schokoladenprodukte, wie beispielsweise Schokoladeneis oder Eiscreme mit Schokoladenüberzug. 65 % der Teilnehmer waren weiblich, der Rest männlich. Das Alter der Tester lag zwischen 16 und 65 Jahren. Jedem Tester wurde eine handelsübliche Milchschokoladenzubereitung einmal ohne und einmal unter Zusatz von 0,04 Gew.-% einer erfindungsgemäßen Additivmischung zur geschmacklichen Beurteilung vorgesetzt.

Bei dem Additiv handelte es sich um eine Zubereitung bestehend aus 45 Gew.-% einer Mischung drei verschiedener handelsüblicher Hefeextrakte, 34 Gew.-% Speisesalz, 16 Gew.-% Zucker bzw. Saccharose sowie 5 Gew.-% Milchsäure.

Die Bewertung erfolgte auf einer Skala von 1 (= geschmacklich inakzeptabel) bis 9 (= hervorragend). Die Ergebnisse sind in der folgenden Tabelle 1 zusammengefasst:

**Tabelle 1**

| Geschmackliche Bewertung Milch-Schokolade / Beliebtheitstest | | | | | | | | | |
|---|---|---|---|---|---|---|---|---|---|
| **Bsp.** | **Geschmacksskala (Bewertungen in % bezogen auf das Testerpanel)** | | | | | | | | |
| | **1** | **2** | **3** | **4** | **5** | **6** | **7** | **8** | **9** |
| V1 | 0 | 5 | 1 | 10 | 6 | 19 | 40 | 15 | 5 |
| 1 | 0 | 1 | 2 | 2 | 6 | 28 | 28 | 28 | 2 |

Der Mittelwert der Bewertungen hat sich von 6,3 nach 6,7 zu Gunsten des erfindungsgemäßen Produktes verschoben. Insbesondere erhöhte sich aber der Anteil der besonders positiven Bewertungen (6 bis 9) von 78 auf 88 %, dabei der Anteil der Bewertungen mit den Noten 8 und 9 von 20 auf 31 %. Die Ergebnisse des Beliebtheitstests zeigen somit eine signifikante Geschmacksverbesserung bei Einsatz der erfindungsgemäßen Additive.

## Patentansprüche

1. Nahrungsmittelzusatzstoffe, enthaltend
(a) Glutaminsäure und
(b) wenigstens ein Nukleotid oder dessen Alkali- und/oder Erdalkalisalze sowie gegebenenfalls
(c) Aromastoffe ausgewählt aus der Gruppe, die gebildet wird von Purinen, Polyphenolen, 2-Acetylpyrazin, 3-Methylbutanol, 2-Phenylethylacetat, Trimethylpyrazin sowie deren Mischungen,
(d) Speisesalz,
(e) Süßstoffe und/oder
(f) Säuerungsmittel.

2. Zusatzstoffe nach Anspruch 1, **dadurch gekennzeichnet, dass** die Nukleotide eine oder mehrere Basen enthalten, die ausgewählt sind aus der Gruppe, die gebildet wird von Adenin, Guanin, Cytosin, Thymin und Uracil.

3. Zusatzstoffe nach den Ansprüchen 1 und/oder 2, **dadurch gekennzeichnet, dass** sie als Komponente (b) Monophosphate enthalten.

4. Zusatzstoffe nach mindestens einem der Ansprüche 1 bis 3, **dadurch gekennzeichnet, dass** sie als Komponente (b) 5'-GMP und/oder 5-TMP und/oder deren Natrium-, Kalium- oder Calciumsalze enthalten.

5. Zusatzstoffe nach mindestens einem der Ansprüche 1 bis 4, **dadurch gekennzeichnet, dass** sie die Komponenten (a) und (b) im Gewichtsverhältnis von etwa 10:90 bis etwa 90:10 enthalten.

6. Zusatzstoffe nach mindestens einem der Ansprüche 1 bis 5, **dadurch gekennzeichnet, dass** sie die Komponenten (a) und (b) in Summe in Mengen von etwa 1 bis etwa 15 Gew.-% enthalten.

7. Zusatzstoffe nach mindestens einem der Ansprüche 1 bis 6, **dadurch gekennzeichnet, dass** sie die Komponenten (a) und (b) in Form mindestens eines Hefeextraktes enthalten.

8. Zusatzstoffe nach Anspruch 7, **dadurch gekennzeichnet, dass** die Hefeextrakte die Komponenten (a) und (b) in Summe in Mengen von etwa 1 bis etwa 15 Gew.-% enthalten.

9. Zusatzstoffe nach den Ansprüchen 7 oder 8, **dadurch gekennzeichnet, dass** die Hefeextrakte einen Natriumchloridgehalt von weniger als etwa 5 Gew.-% aufweisen.

10. Zusatzstoffe nach mindestens einem der Ansprüche 7 bis 9, **dadurch gekennzeichnet, dass** sie
(i) etwa 20 bis etwa 60 Gew.-% Hefeextrakte,
(ii) etwa 10 bis etwa 40 Gew.-% Speisesalz,
(iii) etwa 20 bis etwa 30 Gew.-% Süßstoffe, sowie
(iv) etwa 1 bis etwa 10 Gew.-% Säuerungsmittel
mit der Maßgabe enthalten, dass sich die Mengenangaben zu 100 Gew.-% ergänzen.

11. Nahrungsmittel, enthaltend die Zusatzstoffe nach mindestens einem der Ansprüche 1 bis 10.

12. Nahrungsmittel nach Anspruch 11, **dadurch gekennzeichnet, dass** es sich um Schokoladenprodukte oder Hartkaramellen handelt.

13. Nahrungsmittel nach den Ansprüchen 11 und/oder 12, **dadurch gekennzeichnet, dass** die Zusatzstoffe in Mengen von etwa 0,01 bis etwa 1 Gew.-% enthalten sind.

14. Verfahren zur Verstärkung des Umamigeschmacks von Schokoladen- oder Kakaoprodukten, **dadurch gekennzeichnet, dass** man diesen eine Menge von 0,01 bis 1 Gew.-% einer Mischung, enthaltend
(a) Glutaminsäure und
(b) wenigstens ein Nukleotid oder dessen Alkali- und/oder Erdalkalisalze sowie gegebenenfalls
(c) Aromastoffe ausgewählt aus der Gruppe, die gebildet wird von Purinen, Polyphenolen, 2-Acetylpyrazin, 3-Methylbutanol, 2-Phenylethylacetat, Trimethylpyrazin sowie deren Mischungen,
(d) Speisesalz,
(e) Süßstoffe und/oder
(f) Säuerungsmittel
zusetzt.

15. Verwendung von Mischungen, enthaltend
(a) Glutaminsäure und
(b) wenigstens ein Nukleotid oder dessen Alkali- und/oder Erdalkalisalze sowie gegebenenfalls
(c) Aromastoffe ausgewählt aus der Gruppe, die gebildet wird von Purinen, Polyphenolen, 2-Acetylpyrazin, 3-Methylbutanol, 2-Phenylethylacetat, Trimethylpyrazin sowie deren Mischungen,
(d) Speisesalz,
(e) Süßstoffe und/oder
(f) Säuerungsmittel
als geschmacksverstärkende Zusatzstoffe zu Schokoladen- oder Kakaoprodukten
